# EUROPEAN PATENT APPLICATION

(11) **EP 4 498 189 A1**
(43) Date of publication of application: **29.01.2025**
(21) Application number: 24188448.5
(22) Date of filing: 12.07.2024
(51) Int. Cl.: G05B 19/042, H04B 7/185

(54) **SYSTEM AND METHOD FOR ROUTING AIRCRAT SENSOR TREND DATA TO OFFBOARD DATACENTER FOR ANALYTICS**

(30) Priority: 17.07.2023 US 202318222874
(71) Applicant: ARINC Incorporated, Annapolis, MD 21401 (US)
(72) Inventor: MITCHELL, James P, Cedar Rapids, 52411 (US); ENSBERG, Joseph J, West Hartford, 06117 (US); HALE, William T, Colchester, 06415 (US); WAGNER, Gregory M, TUCSON, 85745-2124 (US); YADAV, Piyush, Cork, T12DD39 (IE); RAMASWAMY, Sitaram, West Hartford, 06117 (US)
(74) Representative: Dehns

(57) **Abstract**

A system may include an aircraft sensor (202) and a processor (206) onboard the aircraft. The processor (206) may be configured to: obtain sensor data (802); obtain a model (804); based at least on the sensor data and the model, infer trend associated with the sensor data (806); determine that the trend is to be communicated to an offboard destination (808); packetize the trend as a packet (810); tag the packet with information associated with one of at least two priority levels (812); determine at least part of a route that said tagged packet is to be communicated along based at least on a priority level associated with said tagged packet (814); and output said tagged packet to an electromagnetic (EM) emitter for communication along said determined at least part of the route (816).

## Description

### BACKGROUND

Aircraft contain many sophisticated electronics and mechanical systems. Currently, such systems are monitored onboard the aircraft and analyzed for normal and abnormal trends.

### SUMMARY

In one aspect, embodiments of the inventive concepts disclosed herein are directed to a system. The system may include at least one sensor installed onboard an aircraft and at least one processor communicatively coupled to the at least one sensor, the at least one processor installed onboard the aircraft. The at least one processor may be configured to: obtain sensor data from the at least one sensor, the sensor data associated with information obtained from the at least one sensor; obtain at least one model; based at least on the sensor data and the at least one model, infer at least one trend associated with the sensor data, each of the at least one trend associated with one or more given sensors of the at least one sensor, the one or more given sensors associated with a particular aircraft subsystem; determine that one or more of the at least one trend is to be communicated to an offboard destination; packetize each trend of the one or more of the at least one trend as at least one packet; tag each packet with information associated with one of at least two priority levels, the at least two priority levels including first and second priority levels, wherein the first priority level is relatively lower in priority than the second priority level; for each tagged packet, determine at least part of a route that said tagged packet is to be communicated along based at least on a priority level associated with said tagged packet; and for each tagged packet, output said tagged packet to an electromagnetic (EM) emitter for communication along said determined at least part of the route.

In a further aspect, embodiments of the inventive concepts disclosed herein are directed to a method. The method may include: obtaining, by at least one processor communicatively coupled to at least one sensor, sensor data from the at least one sensor, the sensor data associated with information obtained from the at least one sensor, the at least one sensor installed onboard an aircraft, the at least one processor installed onboard the aircraft; obtaining, by the at least one processor, at least one model; based at least on the sensor data and the at least one model, inferring, by the at least one processor, at least one trend associated with the sensor data, each of the at least one trend associated with one or more given sensors of the at least one sensor, the one or more given sensors associated with a particular aircraft subsystem; determining, by the at least one processor, that one or more of the at least one trend is to be communicated to an offboard destination; packetizing, by the at least one processor, each trend of the one or more of the at least one trend as at least one packet; tagging, by the at least one processor, each packet with information associated with one of at least two priority levels, the at least two priority levels including first and second priority levels, wherein the first priority level is relatively lower in priority than the second priority level; for each tagged packet, determining, by the at least one processor, at least part of a route that said tagged packet is to be communicated along based at least on a priority level associated with said tagged packet; and for each tagged packet, outputting, by the at least one processor, said tagged packet to an electromagnetic (EM) emitter for communication along said determined at least part of the route.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a view of an exemplary embodiment of a system according to the inventive concepts disclosed herein.
FIG. 2A is a view of the aircraft of the system of FIG. 1 according to the inventive concepts disclosed herein.
FIG. 2B is a view of a portion of the aircraft of FIG. 2A according to the inventive concepts disclosed herein.
FIG. 2C is a view of a portion of the aircraft of FIG. 2A according to the inventive concepts disclosed herein.
FIG. 3 is a view of the satellite communication (SatCom) network operations center (NOC) of the system of FIG. 1 according to the inventive concepts disclosed herein.
FIG. 4 is a view of the service layer datacenter of the system of FIG. 1 according to the inventive concepts disclosed herein.
FIG. 5 is a view of the distributed service layer datacenter of the system of FIG. 1 according to the inventive concepts disclosed herein.
FIG. 6 is a view of the datacenter of the system of FIG. 1 according to the inventive concepts disclosed herein.
FIG. 7 is a view of the radio access network (RAN) of the system of FIG. 1 according to the inventive concepts disclosed herein.
FIG. 8 is a diagram of an exemplary embodiment of a method according to the inventive concepts disclosed herein.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein may be directed to a method and system including at least one aircraft sensor and at least one processor configured to route sensor trends to an offboard datacenter for analytics.

Some embodiments may include a system and method that may be configured to collect "at the network Edge" aircraft sensor data, to perform data analytics utilizing Edge and end user artificial intelligence (Al) processing techniques to identify trends, and to deliver the data through a low-cost route or prioritized route to a data analytics processing center on the ground for the purpose of further analysis and to develop actionable data outputs (e.g., Al outputs) for various entities having interest in improving and maintaining, for example, aircraft health, flight efficiency, predictive maintenance, overall optimal system performance, and/or system awareness. In some embodiments, there may be a number of system components that work together on the aircraft to collect and analyze data. The system may include on-board sensors of a variety of types, such as brake wear sensors, fluid level sensors, mechanical wear level sensors, avionics systems built-in test (BITE) summaries, predictive maintenance sensors, cabin system failure sensors, atmospheric sensors, air pressure sensors, atmospheric condition sensors, and/or contrail humidity sensors (e.g., of a contrail humidity sensor system), some or all of which may provide situational awareness sensor data. In some embodiments, the system may include at least one processor (e.g., of an edge computing device) connected to the sensors which collect sensor data in real-time. The at least one processor may be configured to execute software for performing local trend analysis (e.g., which may be a form of data reduction) by utilizing Al models, such as statistical models, stochastic models, probability analysis models, Bayesian models, Kalman filter models, optimization models (e.g., risk-payoff Lagrange matrix models), and/or machine learning (ML) models for improved decision making. In some embodiments, the at least one processor may be configured to use any suitable Al model(s), such as a Deep Neural Network(s), a generative adversarial network(s) (GANs), a recurrent neural network(s), and/or a Transformer network(s). The at least one processor may make its data and processing decisions optionally available to a local interactive user-interface system (e.g., which may include a display) for aircraft personnel (e.g., pilots, co-pilots, and/or aircraft cabin crew) to access or may also be forwarded to an on-ground end user device via a satellite and/or air-to-ground communications system.

In some embodiments, the at least one processor (e.g., of the edge computing device, which may be an Al enabled device), on-board the aircraft, may provide quicker and/or more consistent results from hard to detect early trends that may otherwise be difficult for a team of humans to identify consistently. In some embodiments, the at least one processor may greatly reduce the amount of data that is required to be delivered to downstream (e.g., offboard) processing function and entities. This reduction as performed on numerous system inputs may also reduce the cost and/or time required for completing communications via an air-to-ground network system. For example, dedicated air-to-ground communication systems can cost thousands of dollars to maintain in an "always on" condition in a long-haul aircraft flight depending on location and are often completely avoided for that reason; for example, a satellite network amortizes launch costs and spacecraft lifetime and builds such amortized costs into service fees, which make satellite networks communications costly to use. In some embodiments, on-board Al processing of some data, such as sensor data, may provide a consistent ongoing value to airlines and other aircraft operators by providing a safer aircraft and lower operational cost.

In some embodiments, any number of satellite services and/or air-to-ground connectivity options may be employed for the data link to deliver information to a ground datacenter. At such ground datacenter(s), further analytics may be performed into actionable output from a highest-level Al function including non-human intervention such as automatically scheduling service and automatically ordering brake parts as a just-in-time or predictive action for the airline, as an example. For example, brake parts may be delivered to a service depot prior to an aircraft's automatically scheduled service arrival.

Some embodiments may include using 5G and/or 6G network slicing, whereby, for example, the data on-board the aircraft is "tagged" and/or packetized for use by downstream data-slicing network switches as one of a low-priority or high-priority delivery. In some embodiments, an onboard Al enabled edge computing device may enable a lowest-cost delivery of data (or prioritized routing of mission critical data), averting otherwise high-cost default satcom route options. The tagged and/or packetized designation may be recognized after the modem demodulated radiofrequency (RF) signals arrive at a network operations center (NOC). Data may be vectored by a network slicing service layer function of a ground datacenter associated with, for example, the satcom provider. The information may then be routed via a non-priority or priority internet slice infrastructure layer to a receiving service function of another ground datacenter near another ground datacenter configured to perform ground analytics.

In some embodiments, a similar process may be followed via an air-to-ground network instead of satellite by using an air-to-ground cell radio access network (RAN).

In some embodiments, a similar process may be followed if the aircraft is on the ground. For example, network slicing may be utilized for lowest cost or highest urgency delivery of data for achieving actionable results desired by a ground datacenter configured to perform analytics.

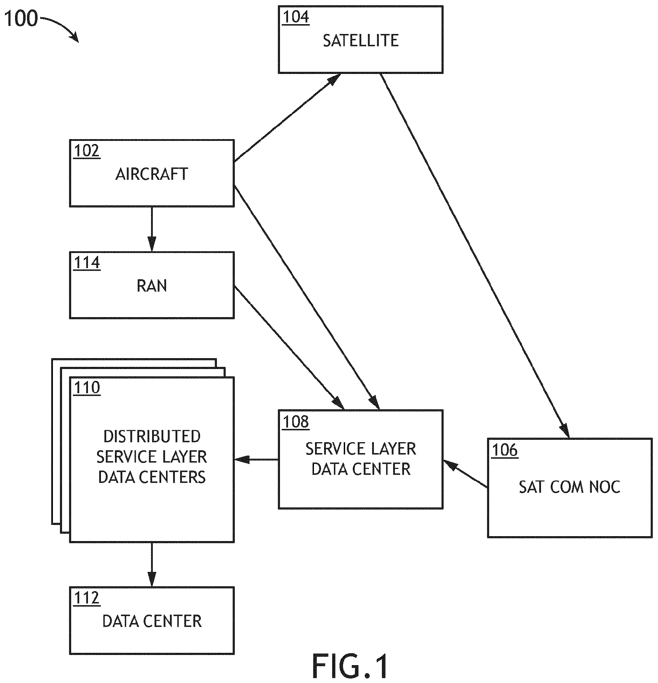

Referring now to FIGS. 1-7, an exemplary embodiment of a system 100 according to the inventive concepts disclosed herein is depicted. In some embodiments, the system 100 may include an aircraft 102 (e.g., a piloted, remote piloted, and/or uncrewed aerial vehicle (UAV)), at least one satellite 104, at least one satellite communication NOC 106, at least one service layer datacenter 108 (e.g., at least one 5G or 6G service layer datacenter), at least one distributed service layer datacenter 110 (e.g., at least one 5G or 6G distributed service layer datacenter), at least one datacenter 112 (e.g., at least one datacenter configured to perform ground analytics), and/or at least one RAN 114, some or all of which may be communicatively coupled at any given time.

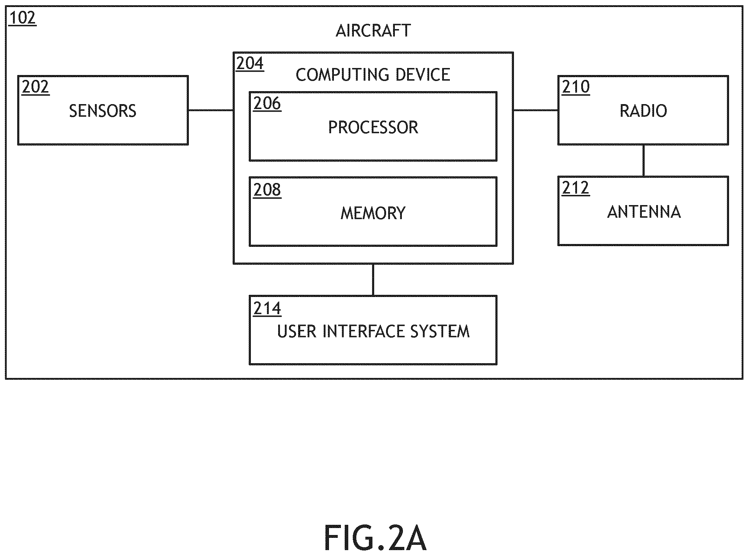

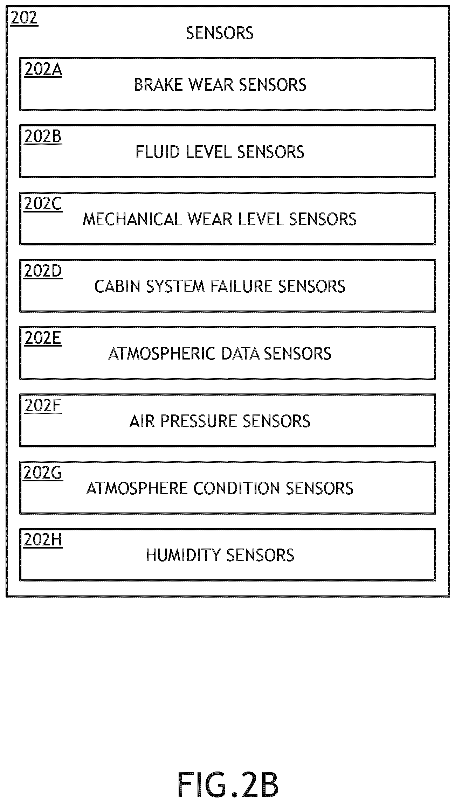

For example, as shown in FIG. 2A, the aircraft 102 may include at least one sensor 202, at least one computing device 204, at least one radio 210, at least one electromagnetic (EM) emitter (e.g., at least one EM transceiver; e.g., at least one antenna 212 and/or at least one laser transceiver), and/or at least one user interface system 214, some or all of which may be communicatively coupled at any given time. In some embodiments, the aircraft 102 may be located in the air or on the ground, at any given time.

For example, as shown in FIGS. 2A-2B, the at least one sensor 202 may include any or all of the following: brake wear sensor(s) 202A configured to sense an amount of mechanical wear on brakes, fluid level sensor(s) 202B configured to sense an amount of fluids, mechanical wear level sensor(s) 202C configured to sense an amount of mechanical wear on various equipment, cabin system failure sensor(s) 202D configured to detect a failure in any of various cabin systems, atmospheric data sensor(s) 202E configured to sense information pertaining to the atmosphere, atmospheric condition sensor(s) 202G configured to sense conditions of the atmosphere, and/or humidity sensor(s) 202H configured to detect humidity (e.g., which may affect and/or be associated with contrail formation), optical contrail detection sensor(s), and/or vibration sensor(s) configured to sense vibrations of the aircraft 102. In some embodiments, sensor data obtained from the sensors 202 may be associated with and/or contain internet of things (IoT) data.

Referring again to FIG. 2A, the at least one computing device 204 may be any suitable computing device or combination of computing devices. For example, the computing device 204 may be an edge computing device, such as an Al enabled edge computing device. In some embodiments, the at least one computing device may include internet protocol (IP) network switch and an edge computing device, which may be implemented as separate computing devices; while in other embodiments, one computing device 204 may include the functionality of the IP network switch and the edge computing device. For example, the IP network switch may be configured to select cellular, SatCom, or terrestrial networks based at least on an aircraft path, location information, lowest cost available network, and/or highest priority network. In some embodiments, the at least one computing device 204 may be configured to identify a condition or issue via the sensors 202. The at least one computing device 204 may be configured to tag outgoing analytics sensor data with a 5G or 6G 3GPP network control plane value (e.g., a control plane packet; e.g., an loT network control plane value) which may automatically vector such analytics data through, for example, lowest cost 5G or 6G 3GPP network sliced terrestrial networking options. In some embodiments, a control plane packet may include a data routing tag (e.g., an loT data routing tag), aircraft position location information (PLI), and/or destination information. In some embodiments, this may beneficially reduce airborne and ground SatCom terminal data quality of service (QoS) multiplexing complexity. For example, the such analytics data may follow any suitable route shown in FIG. 1 from the aircraft 102 to the datacenter 112. In some embodiments, the control plane value(s) may be predetermined or dynamically updated; for example, the control plane value(s) may be dynamically updated (and/or, possibly, predicted) based at least on a state of congestion on the network (e.g., based at least on bandwidth availability) and/or cost and/or pricing of bandwidth, which may help account for incoming cost and/or bandwidth policies that may change over time.

The at least one computing device 204 may include at least one processor 206, at least one memory 208 (e.g., which may maintain a model, such as a trained artificial intelligence (Al) and/or machine learning (ML) model), and/or at least one storage, some or all of which may be communicatively coupled at any given time. For example, the at least one processor 206 may include at least one central processing unit (CPU), at least one graphics processing unit (GPU), at least one field-programmable gate array (FPGA), at least one application specific integrated circuit (ASIC), at least one digital signal processor, at least one data processing unit (DPU), at least one virtual machine (VM) running on at least one processor, and/or the like configured to perform (e.g., collectively perform) any of the operations disclosed throughout. For example, the at least one processor 206 may include a CPU and a GPU configured to perform (e.g., collectively perform) any of the operations disclosed throughout. The processor 206 may be configured to run various software applications or computer code stored (e.g., maintained) in a non-transitory computer-readable medium (e.g., memory 108 and/or storage) and configured to execute various instructions or operations.

For example, the processor 206 of the computing device 204 may be configured to: obtain sensor data from the at least one sensor 202, the sensor data associated with information obtained from the at least one sensor 202; obtain at least one model; based at least on the sensor data and the at least one model, infer at least one trend associated with the sensor data, each of the at least one trend associated with one or more given sensors 202 of the at least one sensor 202, the one or more given sensors 202 associated with a particular aircraft subsystem; determine that one or more of the at least one trend is to be communicated to an offboard destination (e.g., datacenter 112); packetize each trend of the one or more of the at least one trend as at least one packet; tag each packet with information associated with one of at least two priority levels, the priority levels including first and second priority levels, wherein the first priority level is relatively lower in priority than the second priority level; for each tagged packet, determine at least part of a route that said tagged packet is to be communicated along based at least on a priority level associated with said tagged packet; and/or for each tagged packet, output said tagged packet to at least one electromagnetic (EM) emitter (e.g., at least one EM transceiver; e.g., at least one antenna 212 and/or at least one laser transceiver) for communication along said determined at least part of the route.

In some embodiments, the at least one model may include at least one of at least one statistical model, at least one stochastic model, at least one probability analysis model, at least one Bayesian model, at least one Kalman filter, at least one optimization model, at least one trained artificial intelligence (Al) model, or at least one trained machine learning (ML) model, some or all of which may not be mutually exclusive. For example, the at least one model may include the at least one trained artificial intelligence (Al) model and/or the at least one trained machine learning (ML) model.

In some embodiments, the sensor data includes information of at least one of brake wear, fluid levels, mechanical wear level, avionics built-in test (BITE) summaries, predictive maintenance, cabin system failures, air pressure, atmospheric conditions, atmospheric humidity, contrails, or vibrations.

In some embodiments, the first priority level is associated with a relatively lower cost data route than the second priority level. In some embodiments, the second priority level is assigned to given tagged packets that are more time sensitive than other tagged packets that are assigned the first priority level.

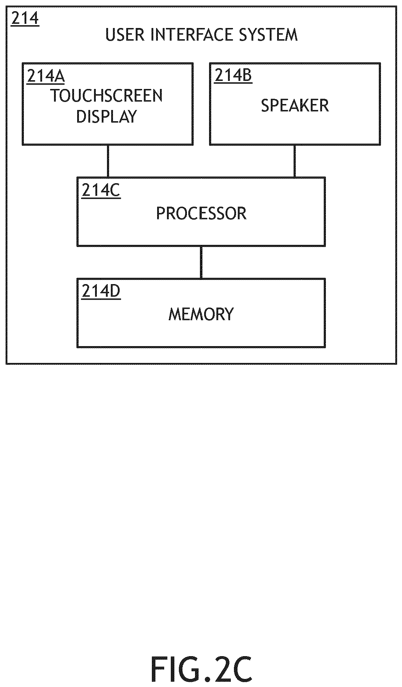

In some embodiments, the aircraft 102 may include a user interface system 214 onboard the aircraft, the user interface system configured to output a notification associated with a given trend of a given tagged packet to a crew member of the aircraft. As shown in FIG. 2C, for example, the user interface system 214 may include at least one touchscreen display 214A, at least one speaker 214B, at least one processor 214C, at least one memory 214D, some or all of which may be communicatively coupled at any given time. In some embodiments, the system 100 may include a user interface system (e.g., which may be similarly configured as the user interface system 214) offboard the aircraft, the user interface system configured to output a notification associated with a given trend of a given tagged packet to a user.

In some embodiments, the information associated with one of at least two priority levels may include a control plane value used at least in part for terrestrial routing of a given packet via network slicing. In some embodiments, the network slicing uses at least one of an internet of things (IoT) slice, a mobile broadband slice, a mission critical slice, or a vehicular network slice.

In some embodiments, the route includes at least one satellite 104, at least one satellite communication (SatCom) network operation center (NOC) 106, at least one service layer datacenter 108, and at least one datacenter 112 configured to perform analytics on each received trend. In some embodiments, one or more of the at least one service layer datacenter 108 may be a 5G service layer datacenter or a 6G service layer datacenter.

In some embodiments, the route may include a radio access network (RAN) 114, at least one service layer datacenter 108, and at least one datacenter 112 configured to perform analytics on each received trend. In some embodiments, one or more of the at least one service layer datacenter 108 may be a 5G service layer datacenter or a 6G service layer datacenter.

In some embodiments, the route may include at least one datacenter 112 configured to perform analytics on each received trend and output analytics data to at least one of an airline, a government aviation regulatory agency (e.g., the Federal Aviation Administration (FAA)), an aircraft original equipment manufacturer (OEM), a service center, a third-party provider, or a communication service (e.g., Starlink). In some embodiments, the analytics data includes information associated with at least one of aircraft parts ordering, service compliance, parts supplying, service scheduling, or communication services.

In some embodiments, the at least one processor 204 being configured to tag each packet with information associated with one of at least two priority levels, the priority levels including first and second priority levels, wherein the first priority level is relatively lower in priority than the second priority level, further comprises: tag each packet with a data routing tag, aircraft position location information, destination information, and information associated with one of at least two priority levels, the priority levels including first and second priority levels, wherein the first priority level is relatively lower in priority than the second priority level. In some embodiments, each tagged packet is a control plane packet. In some embodiments, each control plane packet is a 5G control plane packet or a 6G control plane packet.

Referring again to FIG. 2A, the at least one radio 210 may be any suitable radio or combination of radios for use in the aircraft 102. For example, the at least one radio 210 may include an off-the-shelf Iridium radio configured to communicate via the at least one electromagnetic (EM) emitter (e.g., at least one EM transceiver; e.g., at least one antenna 212 and/or at least one laser transceiver) over a cellular network(s) (e.g., 4G, 5G, and/or 6G), a SatCom network(s) (e.g., low earth orbit (LEO) networks, middle earth orbit (MEO) networks, geostationary earth orbit (GEO) networks, hybrid orbit networks, and/or inclined orbit networks), a laser communication system and/or an air-to-ground (ATG) network(s) (e.g., AirCell, GoGo, world-wide direct beam, indirect beam 5G systems, a Nokia ATG network, and/or an Ericsson ATG network). For example, the at least one radio 210 may be configured to communicate flight crew data (e.g., which may be low or high priority data), passenger internet data (e.g., which may be low priority or high priority data), aircraft data (e.g., which may be low priority or high priority data), and/or vehicular network data (e.g., which may be low priority or high priority data) over an ATG network. For example, the at least one radio 210 may be configured to communicate high priority flight crew data, passenger internet data (e.g., which may be high priority data for broadband), aircraft data (e.g., which may be high priority data), and/or vehicular network data (e.g., which may be high priority data, such as for low latency requirements) over a SatCom network.

Referring to FIG. 2A and 2C, the user interface system 214 may be any suitable user interface system. The user interface system may include any suitable user interface device(s), such as a touchscreen display 214A, a multipurpose control panel, a control panel integrated into a flight deck, a cursor control panel (CCP) (sometimes referred to as a display control panel (DCP)), a keyboard, a mouse, a trackpad, at least one hardware button, a switch, an eye tracking system, a speaker 214B, a laptop, a tablet, and/or a voice recognition system. The user interface system 214 may include at least one processor 214C and memory 214D.

Referring to FIG. 1 again, the at least one satellite 104 may include any suitable satellite or combination of satellites. For example, the at least one satellite 104 may include low earth orbit (LEO) satellites, middle earth orbit (MEO) satellites, geostationary earth orbit (GEO) satellites, elliptical orbit satellites, hybrid orbit satellites, and/or inclined orbit satellites. In some embodiments, the at least one satellite 104 may be configured to communicate over the L-band, the S-band, the C-band, the X-band, the Ku-band, the K-band, the Ka-band, the Q-band, the V-band, the M-band, the W-band, the FIR-band, the MIR-band, the NIR band, the NUV-band, the free space optical band (e.g., O, E, S, C, L, and/or U), laser communication bands, or some combination thereof. In some embodiments, some or all of the satellites 104 may have on-board data routing and in-orbit constellation cross-links and/or 3GPP routing abilities. In other embodiments, the at least one satellites 104 may lack on-board data routing and in-orbit constellation cross-links and/or lack 3GPP routing abilities.

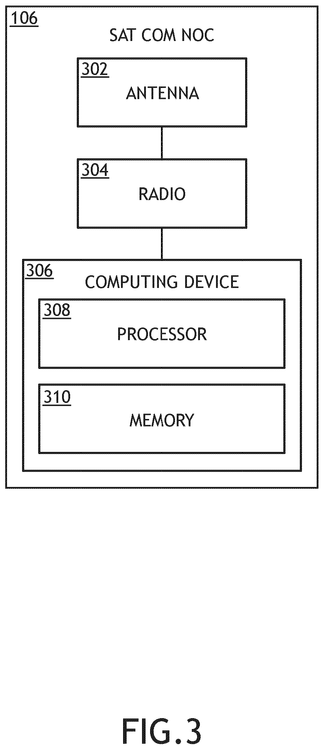

Referring to FIG. 1 and 3, the at least one SatCom NOC 106 may include any suitable SatCom NOC or combination of SatCom NOCs. For example, the SatCom NOC 106 may be a SpaceX, Inmarsat, Iridium, ViaSat, GlobalStar SES, Intelest, and/or Eutelesat NOC. In some embodiments, the at least one SatCom NOC 106 may have data multiplexing and demultiplexing functionality and have public and/or private network interfaces. The at least one SatCom NOC 106 may include at least one electromagnetic (EM) transceiver (e.g., at least one antenna 302 and/or at least one laser transceiver) , at least one radio 304, and/or at least one computing device 306 (e.g., at least one server computing device), some or all of which may be communicatively coupled at any given time. The at least one computing device 306 may include at least one processor 308, at least one memory 310 (e.g., which may maintain a model, such as a trained artificial intelligence (Al) and/or machine learning (ML) model), and/or at least one storage, some or all of which may be communicatively coupled at any given time. For example, the at least one processor 308 may include at least one central processing unit (CPU), at least one graphics processing unit (GPU), at least one field-programmable gate array (FPGA), at least one application specific integrated circuit (ASIC), at least one digital signal processor, at least one data processing unit (DPU), at least one virtual machine (VM) running on at least one processor, and/or the like configured to perform (e.g., collectively perform) any of the operations disclosed throughout. For example, the at least one processor 308 may include a CPU and a GPU configured to perform (e.g., collectively perform) any of the operations disclosed throughout.

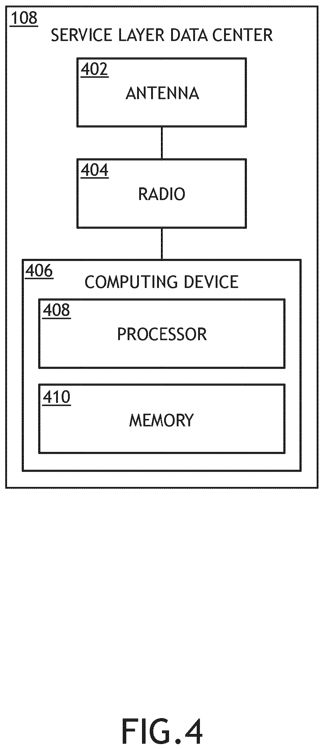

Referring to FIG. 1 and 4, the at least one service layer datacenter 108 may include any suitable service layer datacenter or combination of service layer datacenter, such as at least one 5G and/or 6G service layer datacenter (e.g., at least one 5G and/or 6G service layer central datacenter, sometimes referred to as a 5G and/or 6G central datacenter(s)). In some embodiments, the at least one service layer datacenter 108 may be configured to receive sensor analytics data (e.g., trends (e.g., sensor trends)) and control plane values and to perform network slicing (e.g., 5G and/or 6G network slicing) (e.g., based on priority levels). For example, the at least one service layer datacenter 108 may be configured to perform network slicing on the sensor analytics data (e.g., trends (e.g., sensor trends)) and the control plane values to slice the sensor analytics data into a plurality of network slices, such as an internet of things (IoT) slice(s), a mobile broadband slice(s), a mission critical slice(s), and/or a vehicular network slice(s). In some embodiments, the network slices may be routed based on the control plane values to the distributed service layer datacenter(s) 110 and/or the datacenter(s) 112. The at least one service layer datacenter 108 may include at least one electromagnetic (EM) transceiver (e.g., at least one antenna 402 and/or at least one laser transceiver), at least one radio 404, and/or at least one computing device 406 (e.g., at least one server computing device), some or all of which may be communicatively coupled at any given time. The at least one computing device 406 may include at least one processor 408, at least one memory 410 (e.g., which may maintain a model, such as a trained artificial intelligence (Al) and/or machine learning (ML) model), and/or at least one storage, some or all of which may be communicatively coupled at any given time. For example, the at least one processor 408 may include at least one network slice controller, at least one central processing unit (CPU), at least one graphics processing unit (GPU), at least one field-programmable gate array (FPGA), at least one application specific integrated circuit (ASIC), at least one digital signal processor, at least one data processing unit (DPU), at least one virtual machine (VM) running on at least one processor, and/or the like configured to perform (e.g., collectively perform) any of the operations disclosed throughout. For example, the at least one processor 408 may include a CPU and a GPU configured to perform (e.g., collectively perform) any of the operations disclosed throughout.

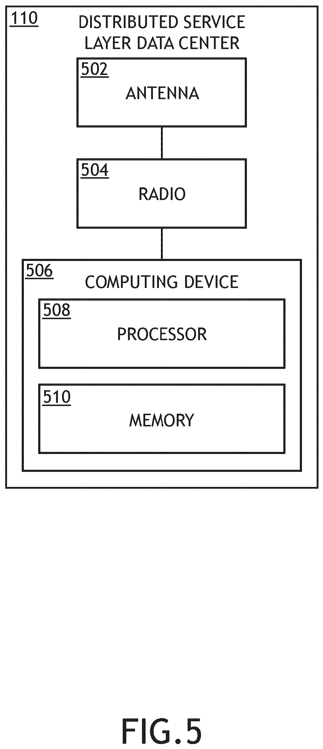

Referring to FIG. 1 and 5, the at least one distributed service layer datacenter 110 may include any suitable distributed service layer datacenter or combination of distributed service layer datacenter, such as at least one 5G and/or 6G distributed service layer datacenter (e.g., at least one 5G and/or 6G distributed service layer datacenter, sometimes referred to as a 5G and/or 6G local datacenter(s)). In some embodiments, the at least one distributed service layer datacenter 110 may be configured to receive sensor analytics data (e.g., trends (e.g., sensor trends)) and/or control plane values from the one or more of the at least one service layer datacenter 108 and to route the sensor analytics data (e.g., trends (e.g., sensor trends)) and/or the control plane values to the datacenter 112. The at least one distributed service layer datacenter 110 may include at least one electromagnetic (EM) transceiver (e.g., at least one antenna 502 and/or at least one laser transceiver), at least one radio 504, and/or at least one computing device 506 (e.g., at least one server computing device), some or all of which may be communicatively coupled at any given time. The at least one computing device 506 may include at least one processor 508, at least one memory 510 (e.g., which may maintain a model, such as a trained artificial intelligence (Al) and/or machine learning (ML) model), and/or at least one storage, some or all of which may be communicatively coupled at any given time. For example, the at least one processor 508 may include at least one network slice controller, at least one central processing unit (CPU), at least one graphics processing unit (GPU), at least one field-programmable gate array (FPGA), at least one application specific integrated circuit (ASIC), at least one digital signal processor, at least one data processing unit (DPU), at least one tensor processing unit (TPU), at least one ML-silicon device, at least one virtual machine (VM) running on at least one processor, and/or the like configured to perform (e.g., collectively perform) any of the operations disclosed throughout. For example, the at least one processor 508 may include a CPU and a GPU configured to perform (e.g., collectively perform) any of the operations disclosed throughout.

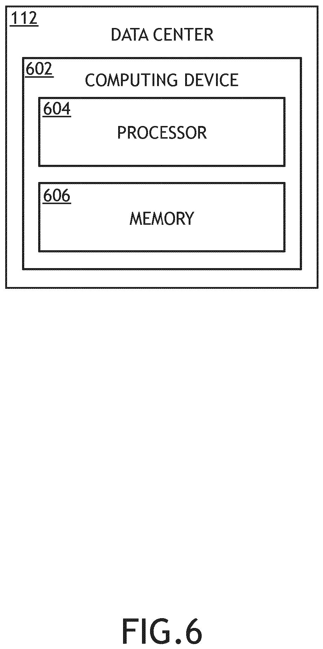

Referring to FIG. 1 and 6, the at least one datacenter 112 may include any suitable datacenter or combination of datacenters, such as at least one datacenter configured to perform ground analytics. In some embodiments, the at least one datacenter 112 is operated by at least one airline, at least one government regulatory agency (e.g., the FAA), at least one aircraft OEM, at least one service center, at least one communication service. In some embodiments, the at least one datacenter 112 may be configured to receive sensor analytics data (e.g., trends (e.g., sensor trends)) and/or control plane values from the one or more of the at least one distributed service layer datacenter 108 and to perform analytics on the sensor analytics data. The at least one datacenter 112 may include at least one computing device 602 (e.g., at least one server computing device), some or all of which may be communicatively coupled at any given time. The at least one computing device 602 may include at least one processor 604, at least one memory 606 (e.g., which may maintain a model, such as a trained artificial intelligence (Al) and/or machine learning (ML) model), and/or at least one storage, some or all of which may be communicatively coupled at any given time. For example, the at least one processor 604 may include at least one network slice controller, at least one central processing unit (CPU), at least one graphics processing unit (GPU), at least one field-programmable gate array (FPGA), at least one application specific integrated circuit (ASIC), at least one digital signal processor, at least one data processing unit (DPU), at least one tensor processing unit (TPU), at least one ML-silicon device, at least one virtual machine (VM) running on at least one processor, and/or the like configured to perform (e.g., collectively perform) any of the operations disclosed throughout. For example, the at least one processor 508 may include a CPU and a GPU configured to perform (e.g., collectively perform) any of the operations disclosed throughout. For example, the at least one

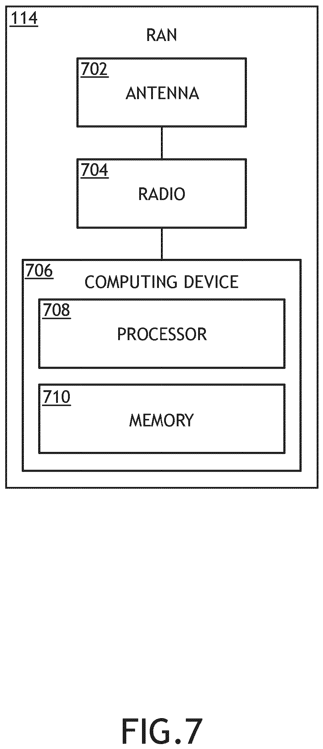

Referring to FIG. 1 and 7, the at least one RAN 114 may include any suitable RAN or combination of RANs. The at least one RAN 114 may include at least one electromagnetic (EM) transceiver (e.g., at least one antenna 702 and/or at least one laser transceiver), at least one radio 704, and/or at least one computing device 706 (e.g., at least one server computing device), some or all of which may be communicatively coupled at any given time. The at least one computing device 706 may include at least one processor 708, at least one memory 710 (e.g., which may maintain a model, such as a trained artificial intelligence (Al) and/or machine learning (ML) model), and/or at least one storage, some or all of which may be communicatively coupled at any given time. For example, the at least one processor 708 may include at least one network slice controller, at least one central processing unit (CPU), at least one graphics processing unit (GPU), at least one field-programmable gate array (FPGA), at least one application specific integrated circuit (ASIC), at least one digital signal processor, at least one data processing unit (DPU), at least one tensor processing unit (TPU), at least one ML-silicon device, at least one virtual machine (VM) running on at least one processor, and/or the like configured to perform (e.g., collectively perform) any of the operations disclosed throughout. For example, the at least one processor 708 may include a CPU and a GPU configured to perform (e.g., collectively perform) any of the operations disclosed throughout.

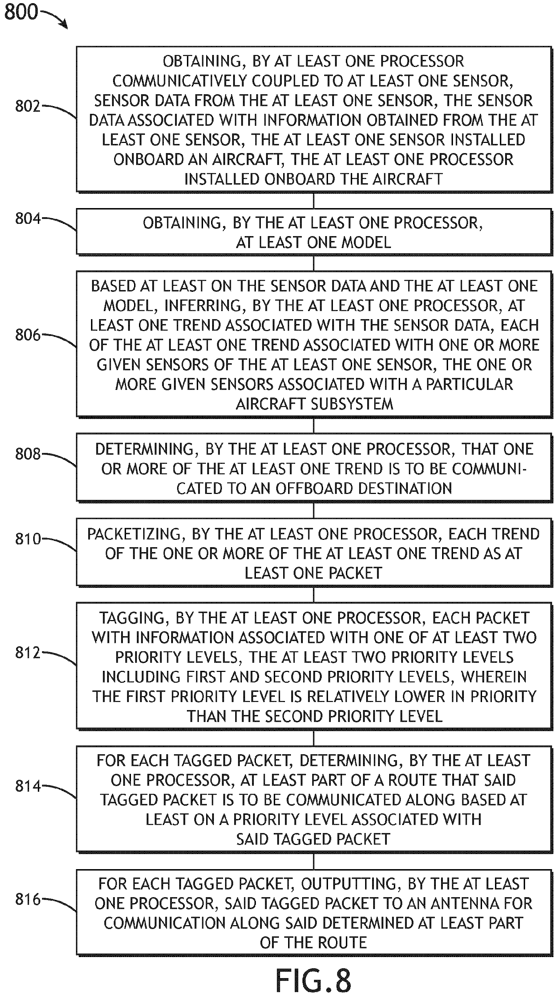

Referring now to FIG. 8, an exemplary embodiment of a method 800 according to the inventive concepts disclosed herein may include one or more of the following steps. Additionally, for example, some embodiments may include performing one or more instances of the method 800 iteratively, concurrently, and/or sequentially. Additionally, for example, at least some of the steps of the method 800 may be performed in parallel, iteratively, and/or concurrently. Additionally, in some embodiments, at least some of the steps of the method 800 may be performed non-sequentially.

A step 802 may include obtaining, by at least one processor communicatively coupled to at least one sensor, sensor data from the at least one sensor, the sensor data associated with information obtained from the at least one sensor, the at least one sensor installed onboard an aircraft, the at least one processor installed onboard the aircraft.

A step 804 may include obtaining, by the at least one processor, at least one model.

A step 806 may include based at least on the sensor data and the at least one model, inferring, by the at least one processor, at least one trend associated with the sensor data, each of the at least one trend associated with one or more given sensors of the at least one sensor, the one or more given sensors associated with a particular aircraft subsystem.

A step 808 may include determining, by the at least one processor, that one or more of the at least one trend is to be communicated to an offboard destination.

A step 810 may include packetizing, by the at least one processor, each trend of the one or more of the at least one trend as at least one packet.

A step 812 may include tagging, by the at least one processor, each packet with information associated with one of at least two priority levels, the at least two priority levels including first and second priority levels, wherein the first priority level is relatively lower in priority than the second priority level.

A step 814 may include for each tagged packet, determining, by the at least one processor, at least part of a route that said tagged packet is to be communicated along based at least on a priority level associated with said tagged packet.

A step 816 may include for each tagged packet, outputting, by the at least one processor, said tagged packet to an electromagnetic (EM) emitter (e.g., an electromagnetic transceiver; e.g., at least one antenna 202 and/or at least one laser emitter) for communication along said determined at least part of the route.

Further, the method 800 may include any of the operations disclosed throughout.

Referring generally again to FIGS. 1-8, as will be appreciated from the above, embodiments of the inventive concepts disclosed herein may be directed to a method and system including at least one aircraft sensor and at least one processor configured to route sensor trends to an offboard datacenter for analytics.

As used throughout and as would be appreciated by those skilled in the art, "at least one non-transitory computer-readable medium" may refer to as at least one non-transitory computer-readable medium (e.g., at least one computer-readable medium implemented as hardware; e.g., at least one non-transitory processor-readable medium, at least one memory (e.g., at least one nonvolatile memory, at least one volatile memory, or a combination thereof; e.g., at least one random-access memory, at least one flash memory, at least one read-only memory (ROM) (e.g., at least one electrically erasable programmable read-only memory (EEPROM)), at least one on-processor memory (e.g., at least one on-processor cache, at least one on-processor buffer, at least one on-processor flash memory, at least one on-processor EEPROM, or a combination thereof), or a combination thereof), at least one storage device (e.g., at least one hard-disk drive, at least one tape drive, at least one solid-state drive, at least one flash drive, at least one readable and/or writable disk of at least one optical drive configured to read from and/or write to the at least one readable and/or writable disk, or a combination thereof), or a combination thereof).

As used throughout, "at least one" means one or a plurality of; for example, "at least one" may comprise one, two, three, ..., one hundred, or more. Similarly, as used throughout, "one or more" means one or a plurality of; for example, "one or more" may comprise one, two, three, ..., one hundred, or more. Further, as used throughout, "zero or more" means zero, one, or a plurality of; for example, "zero or more" may comprise zero, one, two, three, ..., one hundred, or more.

In the present disclosure, the methods, operations, and/or functionality disclosed may be implemented as sets of instructions or software readable by a device. Further, it is understood that the specific order or hierarchy of steps in the methods, operations, and/or functionality disclosed are examples of exemplary approaches. Based upon design preferences, it is understood that the specific order or hierarchy of steps in the methods, operations, and/or functionality can be rearranged while remaining within the scope of the inventive concepts disclosed herein. The accompanying claims may present elements of the various steps in a sample order, and are not necessarily meant to be limited to the specific order or hierarchy presented.

It is to be understood that embodiments of the methods according to the inventive concepts disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

From the above description, it is clear that the inventive concepts disclosed herein are well adapted to carry out the objects and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the broad scope and coverage of the inventive concepts disclosed and claimed herein.

## Claims

1. A system, comprising:
at least one sensor (202) installed onboard an aircraft; and
at least one processor (206) communicatively coupled to the at least one sensor (202), the at least one processor (206) installed onboard the aircraft, the at least one processor (206) configured to:
obtain sensor data from the at least one sensor (202), the sensor data associated with information obtained from the at least one sensor (202);
obtain at least one model;
based at least on the sensor data and the at least one model, infer at least one trend associated with the sensor data, each of the at least one trend associated with one or more given sensors of the at least one sensor (202), the one or more given sensors associated with a particular aircraft subsystem;
determine that one or more of the at least one trend is to be communicated to an offboard destination;
packetize each trend of the one or more of the at least one trend as at least one packet;
tag each packet with information associated with one of at least two priority levels, the at least two priority levels including first and second priority levels, wherein the first priority level is relatively lower in priority than the second priority level;
for each tagged packet, determine at least part of a route that said tagged packet is to be communicated along based at least on a priority level associated with said tagged packet; and
for each tagged packet, output said tagged packet to an electromagnetic (EM) emitter for communication along said determined at least part of the route.

2. The system of claim 1, wherein the at least one model includes at least one of at least one statistical model, at least one stochastic model, at least one probability analysis model, at least one Bayesian model, at least one Kalman filter, at least one optimization model, at least one trained artificial intelligence "Al" model, or at least one trained machine learning "ML" model.

3. The system of claim 2, wherein the at least one model includes the at least one trained artificial intelligence "Al" model and/or the at least one trained machine learning "ML" model.

4. The system of any preceding claim, wherein the sensor data includes information of at least one of brake wear, fluid levels, mechanical wear level, avionics built-in test "BITE" summaries, predictive maintenance, cabin system failures, air pressure, atmospheric conditions, vibration, atmospheric humidity, or contrails.

5. The system of any preceding claim, wherein the first priority level is associated with a relatively lower cost data route than the second priority level.

6. The system of claim 5, wherein the second priority level is assigned to given tagged packets that are more time sensitive than other tagged packets that are assigned the first priority level.

7. The system of any preceding claim, further comprising a user interface system onboard the aircraft, the user interface system configured to output a notification associated with a given trend of a given tagged packet to a crew member of the aircraft.

8. The system of any preceding claim, further comprising a user interface system offboard the aircraft, the user interface system configured to output a notification associated with a given trend of a given tagged packet to a user.

9. The system of any preceding claim, wherein the information associated with one of at least two priority levels includes a control plane value used at least in part for terrestrial routing of a given packet via network slicing, and optionally wherein the network slicing uses at least one of an internet of things "IoT" slice, a mobile broadband slice, a mission critical slice, or a vehicular network slice.

10. The system of any preceding claim, wherein the route includes at least one satellite, at least one satellite communication "SatCom" network operation center "NOC", at least one service layer datacenter, and at least one datacenter configured to perform analytics on each received trend, and optionally wherein one or more of the at least one service layer datacenter is a 5G service layer datacenter or a 6G service layer datacenter.

11. The system of any preceding claim, wherein the route includes a radio access network "RAN", at least one service layer datacenter, and at least one datacenter configured to perform analytics on each received trend, and optionally wherein one or more of the at least one service layer datacenter is a 5G service layer datacenter or a 6G service layer datacenter.

12. The system of any preceding claim, wherein the route includes at least one datacenter configured to perform analytics on each received trend and output analytics data to at least one of an airline, a government aviation regulatory agency, an aircraft original equipment manufacturer "OEM", a service center, or a communication service, and optionally wherein the analytics data includes information associated with at least one of aircraft parts ordering, service compliance, parts supplying, service scheduling, or communication services.

13. The system of any preceding claim, wherein the at least one processor (206) being configured to tag each packet with information associated with one of at least two priority levels, the priority levels including first and second priority levels, wherein the first priority level is relatively lower in priority than the second priority level, further comprises:
tag each packet with a data routing tag, aircraft position location information, destination information, and information associated with one of at least two priority levels, the priority levels including first and second priority levels, wherein the first priority level is relatively lower in priority than the second priority level.

14. The system of claim 13, wherein each tagged packet is a control plane packet, and optionally wherein each control plane packet is a 5G control plane packet or a 6G control plane packet.

15. A method, comprising:
obtaining, by at least one processor (206) communicatively coupled to at least one sensor (202), sensor data from the at least one sensor (202), the sensor data associated with information obtained from the at least one sensor (202), the at least one sensor (202) installed onboard an aircraft, the at least one processor (206) installed onboard the aircraft;
obtaining, by the at least one processor (206), at least one model;
based at least on the sensor data and the at least one model, inferring, by the at least one processor (206), at least one trend associated with the sensor data, each of the at least one trend associated with one or more given sensors of the at least one sensor (202), the one or more given sensors associated with a particular aircraft subsystem;
determining, by the at least one processor (206), that one or more of the at least one trend is to be communicated to an offboard destination;
packetizing, by the at least one processor (206), each trend of the one or more of the at least one trend as at least one packet;
tagging, by the at least one processor (206), each packet with information associated with one of at least two priority levels, the at least two priority levels including first and second priority levels, wherein the first priority level is relatively lower in priority than the second priority level;
for each tagged packet, determining, by the at least one processor (206), at least part of a route that said tagged packet is to be communicated along based at least on a priority level associated with said tagged packet; and
for each tagged packet, outputting, by the at least one processor (206), said tagged packet to an electromagnetic "EM" emitter for communication along said determined at least part of the route.
